# EUROPÄISCHE PATENTSCHRIFT

(11) **EP 3 442 844 B1**
(45) Veröffentlichungstag und Bekanntmachung des Hinweises auf die Patenterteilung: **27.01.2021**
(21) Anmeldenummer: 17727201.0
(22) Anmeldetag: 31.05.2017
(51) Int. Cl.: B61D 13/02, B61D 27/00, B61D 1/06

(54) **LUFTVERTEILEINRICHTUNG FÜR EIN FAHRZEUG**
AIR DISTRIBUTION DEVICE FOR A VEHICLE
DISPOSITIF DE RÉPARTITION D'AIR POUR VÉHICULE

(30) Priorität: 01.06.2016 DE 102016209589
(43) Veröffentlichungstag der Anmeldung: 20.02.2019
(73) Patentinhaber: Siemens Mobility GmbH, 81739 München (DE)
(72) Erfinder: HENKEL, Sven, 47829 Krefeld (DE); KASAP, Irfan, 44653 Herne (DE); MUELLER, Tomas, 708 00 Ostrava (CZ)
(86) Internationale Anmeldenummer: PCT/EP2017/063119
(87) Internationale Veröffentlichungsnummer: WO 2017/207608

(56) Entgegenhaltungen:
- EP-A1- 2 851 258
- WO-A1-2014/012711
- DE-A1-102007 005 050
- DE-A1-102014 214 581
- DE-C1- 19 654 633
- DE-T2-602005 003 681
- US-A- 5 016 704
- US-B2- 8 869 547

## Beschreibung

Die Erfindung betrifft eine Luftverteileinrichtung für ein Fahrzeug, welche einen Lufteinlass, einen Warmluftauslass und einen Haupt-Kaltluftauslass aufweist.

Eine solche Luftverteileinrichtung ist aus der WO2014/012711 A1 bekannt.

Es ist außerdem bekannt, eine solche Luftverteileinrichtung in einem Fahrzeug, insbesondere in einem Schienenfahrzeug, einzusetzen, um klimatisierte Luft in einem Fahrgastraum des Fahrzeugs zu verteilen. Von einem Klimagerät, das mit dem Lufteinlass der Luftverteileinrichtung verbunden ist, wird - abhängig davon, ob das Klimagerät im Heizmodus oder im Kühlmodus betrieben wird - Warmluft oder Kaltluft durch den Lufteinlass in die Luftverteileinrichtung eingeleitet. Die Luftverteileinrichtung wiederum führt die Luft über ihre Luftauslässe zu unterschiedlichen Lufteinlässen des Fahrgastraums.

Der Haupt-Kaltluftauslass und einen Neben-Kaltluftauslass der Luftverteileinrichtung können insbesondere mit unterschiedlichen Lufteinlässen des Fahrgastraums verbunden sein. Wird die Luftverteileinrichtung beispielsweise in einem Doppelstockwagen mit einem Oberdeck und einem Unterdeck eingesetzt, kann einer dieser beiden Kaltluftauslässe über eine Lochdecke des Oberdecks und der andere dieser beiden Kaltluftauslässe über eine Lochdecke des Unterdecks mit dem Fahrgastraum verbunden sein. Der Warmluftauslass hingegen kann zum Beispiel über mehrere Leitungen mit Lufteinlässen in einem Boden- und/oder Fensterbereich des Fahrgastraums verbunden sein.

Abhängig davon, in welchem Modus das Klimagerät betrieben werden soll, können einzelne Luftauslässe der Luftverteileinrichtung jeweils mittels einer Absperreinrichtung abgesperrt oder freigegeben werden. Wird das Klimagerät im Heizmodus betrieben, können die Kaltluftauslässe zum Beispiel abgesperrt werden, sodass Warmluft über den Warmluftauslass, jedoch nicht über die Kaltluftauslässe in den Fahrgastraum eintreten kann. Wird das Klimagerät dagegen im Kühlmodus betrieben, ist typischerweise ein höherer Luftdurchsatz durch die Luftverteileinrichtung gewünscht als im Falle des Heizbetriebs. Um im Kühlbetrieb einen höheren Luftdurchsatz durch die Luftverteileinrichtung zu erreichen, können beispielsweise alle Luftauslässe der Luftverteileinrichtung freigegeben werden.

Eine Aufgabe der Erfindung ist es, eine gattungsgemäße Luftverteileinrichtung bereitzustellen, welche eine energieeffiziente Klimatisierung eines Fahrzeugs ermöglicht.

Diese Aufgabe wird erfindungsgemäß durch eine Luftverteileinrichtung mit den Merkmalen des Anspruchs 1 gelöst.

Die erfindungsgemäße Luftverteileinrichtung weist einen Lufteinlass, einen Warmluftauslass, einen Haupt-Kaltluftauslass und einen Neben-Kaltluftauslass auf. Darüber hinaus umfasst die erfindungsgemäße Luftverteileinrichtung eine Warmluftführung, durch welche der Warmluftauslass mit dem Lufteinlass verbunden ist, eine Kaltluftführung, durch welche der Haupt-Kaltluftauslass und der Neben-Kaltluftauslass mit dem Lufteinlass verbunden sind, und eine Absperreinrichtung zum Absperren und Freigeben der Kaltluftführung.

Vorteilhafte Weiterbildungen der erfindungsgemäßen Luftverteileinrichtung sind jeweils Gegenstand der abhängigen Patentansprüche sowie der nachfolgenden Beschreibung.

Die Erfindung geht von der Überlegung aus, dass bei bisherigen gattungsgemäßen Luftverteileinrichtungen keine separaten Strömungsführungen zu den Kaltluftauslässen einerseits und zu dem Warmluftauslass andererseits vorgesehen sind. Die fehlenden separaten Strömungsführungen führen dazu, dass Luft, die durch den Lufteinlass eintritt, sowohl zum Warmluftauslass als auch zu den Kaltluftauslässen strömt. Sollen sowohl der Haupt-Kaltluftauslass als auch der Neben-Kaltluftauslass abgesperrt werden können, wird bei einer solchen bisherigen Luftverteileinrichtung für den Haupt-Kaltluftauslass und den Neben-Kaltluftauslass jeweils eine eigene Absperreinrichtung benötigt.

Weiterhin beruht die Erfindung auf der Erkenntnis, dass jede Absperreinrichtung zu Druckverlusten in der Luftverteileinrichtung führt. Daher ist im Hinblick auf eine energieeffiziente Klimatisierung eine möglichst geringe Anzahl an Absperreinrichtungen für die Kaltluftauslässe vorteilhaft. Besonders bevorzugt ist es daher, wenn die Luftverteileinrichtung genau eine Absperreinrichtung aufweist.

Dadurch, dass bei der Erfindung eine Warmluftführung und eine Kaltluftführung vorgesehen sind, können zwei Luftströmungen realisiert werden, die zumindest in einem Teilbereich der Luftverteileinrichtung voneinander entkoppelt sind. Die Warmluftführung kann eine Luftströmung zum Warmluftauslass führen, wohingegen die Kaltluftführung eine Luftströmung zu den Kaltluftauslässen führen kann. Zweckmäßigerweise sind die Warmluftführung und die Kaltluftführung abschnittweise gegeneinander abgegrenzt.

Die Aufteilung in eine Warmluftführung und eine Kaltluftführung ermöglicht es, mittels besagter Absperreinrichtung zum Absperren und Freigeben der Kaltluftführung die Luftzufuhr sowohl zum Haupt-Kaltluftauslass als auch zum Neben-Kaltluftauslass zu steuern. Jeweils eine eigene Absperreinrichtung für den Haupt-Kaltluftauslass und dem Neben-Kaltluftauslass ist daher grundsätzlich nicht erforderlich. Dadurch können geringere Druckverluste in der Luftverteileinrichtung erreicht werden (als im Falle der Verwendung mehrerer separater Absperreinrichtungen). Dies wiederum ermöglicht es, zur Fahrzeugklimatisierung ein Kühlgerät mit einer geringeren Luftförderleistung zu verwenden bzw. das Kühlgerät mit einer geringeren Luftförderleistung zu betreiben. Folglich kann die Klimatisierung energieeffizienter realisiert werden.

Da zusätzlich zu besagter Absperreinrichtung zum Absperren und Freigeben der Kaltluftführung grundsätzlich keine weitere Absperreinrichtung erforderlich ist, kann die Luftverteileinrichtung kostengünstiger als bisherige Luftverteileinrichtungen, welche mehrere Absperreinrichtungen aufweisen, realisiert werden. Zudem kann der Wartungsaufwand für die Luftverteileinrichtung reduziert werden.

Als Warmluft kann vorliegend Luft aufgefasst werden, deren Temperatur größer ist als eine Lufttemperatur in einer Umgebung des Fahrzeugs. Entsprechend kann als Kaltluft vorliegend Luft aufgefasst werden, deren Temperatur kleiner ist als die Lufttemperatur in der Umgebung des Fahrzeugs. Ferner kann der Begriff "verbunden" vorliegend als strömungstechnisch verbunden aufgefasst werden.

Der Wortbestandteil "Warm" bzw. "Kalt" in den Begriffen Kaltluftführung, Haupt-Kaltluftauslass, Neben-Kaltluftauslass, Warmluftführung und Warmluftauslass dient dazu, die mit diesen Begriffen bezeichneten Elemente der Luftverteileinrichtung voneinander zu unterscheiden. Diese Wortbestandteile sind nicht notwendigerweise als Hinweis auf eine Temperatur einer durch das jeweilige Element strömenden Gasströmung zu verstehen. So kann beispielsweise durch die Warmluftführung bzw. durch den Warmluftauslass Kaltluft strömen, insbesondere wenn ein mit der Luftverteileinrichtung verbundenes Klimagerät im Kühlmodus betrieben wird.

Außerdem dient der Wortbestandteil "Haupt" bzw. "Neben" in den Begriffen Haupt-Kaltluftauslass und Neben-Kaltluftauslass dazu, die mit diesen Begriffen bezeichneten Elemente der Luftverteileinrichtung voneinander zu unterscheiden. Die letztgenannten Wortbestandteile sind nicht notwendigerweise als ein Hinweis auf eine Größe bzw. eine Querschnittsfläche des jeweiligen Elements zu verstehen.

Prinzipiell könnte man die Begriffe "Kaltluftführung" und "Warmluftführung" durch die Begriffe "erste Luftführung" und "zweite Luftführung" ersetzen. In analoger Weise könnte man die Begriffe "Haupt-Kaltluftauslass", "Neben-Kaltluftauslass" und "Warmluftauslass" prinzipiell durch die Begriffe "erster Luftauslass", "zweiter Luftauslass" und "dritter Luftauslass" ersetzen.

Unter einem Lufteinlass der Luftverteileinrichtung kann vorliegend ein Einlass verstanden werden, durch welchen eine Gasströmung, insbesondere eine Luftströmung, in einen Innenraum der Luftverteileinrichtung eintreten kann. Entsprechend kann unter einem Luftauslass der Luftverteileinrichtung ein Auslass verstanden werden, durch welchen eine Gasströmung aus dem Innenraum der Luftverteileinrichtung austreten kann.

Unter einer Luftführung im Sinne der Erfindung kann eine durch eine oder mehrere Wandungen der Luftverteileinrichtung ausgebildete Baueinheit aufgefasst werden, welche einer Gasströmung eine bestimmte (geführte) Bewegungsrichtung aufzwingt. Insbesondere kann eine Luftführung im Sinne der Erfindung als ein Kanal bzw. ein System aus mehreren miteinander verbundenen Teilkanälen ausgebildet sein.

Als Absperren der Kaltluftführung kann ein Schließen der Kaltluftführung bzw. ihres Querschnitts aufgefasst werden. Zweckmäßigerweise kann im abgesperrten Zustand der Kaltluftführung eine Gasströmung vom Lufteinlass der Luftverteileinrichtung bis zur Absperreinrichtung, jedoch nicht bis zu den Kaltluftauslässen strömen. Weiter ist es zweckmäßig, wenn im abgesperrten Zustand der Kaltluftführung eine Gasströmung vom Lufteinlass der Luftverteileinrichtung zum Warmluftauslass strömen kann. Als Freigeben der Kaltluftführung kann ein Öffnen der Kaltluftführung bzw. ihres Querschnitts aufgefasst werden.

Zweckmäßigerweise kann die Absperreinrichtung mindestens zwei Zustände bzw. Stellungen annehmen, insbesondere einen vollständig geöffneten und einen vollständig geschlossenen Zustand. In bevorzugter Weise kann die Absperreinrichtung einen oder mehrere Zwischenzustände bzw. Zwischenstellungen zwischen diesen beiden Zuständen annehmen.

Ferner ist es zweckmäßig, wenn die Absperreinrichtung eine Schließeinheit aufweist. Des Weiteren ist es vorteilhaft, wenn die Absperreinrichtung eine Antriebseinheit zum Antreiben der Schließeinheit aufweist. Bei der Antriebseinheit kann es sich zum Beispiel um einen Elektromotor handeln. Weiter ist es zweckmäßig, wenn die Luftverteileinrichtung eine Steuervorrichtung, beispielsweise in Form eines programmierbaren Prozessors, aufweist, welche zum Steuern der Antriebseinheit eingerichtet ist.

Die Absperreinrichtung, insbesondere deren Schließeinheit, ist vorzugsweise an einer Stelle platziert sein, an welcher die Warmluftführung und die Kaltluftführung voneinander abzweigen.

In einer vorteilhaften Ausgestaltung der Erfindung ist die Schließeinheit eine schwenkbar gelagerte Klappe. Dies ermöglicht insbesondere eine kompakte Ausgestaltung der Absperreinrichtung. Die Schließeinheit kann mehrteilig ausgeführt sein. So kann die Schließeinheit zum Beispiel mehrere, insbesondere zwei, Platten umfassen. Das heißt, die Schließeinheit kann insbesondere eine Doppelklappe sein.

Die Platten können insbesondere parallel zueinander angeordnet sein. Ferner können die Platten mechanisch gekoppelt sein, zum Beispiel über eine Welle. Vorzugsweise sind die Platten simultan und gleichsinnig schwenkbar.

Besonders bevorzugt ist es, wenn die Schließeinheit um 90° schwenkbar ist. Insbesondere kann die Schießeinheit von einer Stellung, in der sie parallel zu einer Bodenwandung der Luftverteileinrichtung ausgerichtet ist, in eine Stellung, in welcher die Schließeinheit senkrecht zu der Bodenwandung ausgerichtet ist, schwenkbar sein.

Alternativ kann das Schließelement eine verschiebbar gelagerte Platte oder eine Einheit aus mehreren verschiebbar gelagerten Platten sein.

Vorteilhafterweise ist die Schließeinheit stromabwärts des ersten Zehntels eines sich vom Lufteinlass zum Haupt-Kaltluftauslass erstreckenden Strömungswegs angeordnet. Weiter ist es vorteilhaft, wenn die Schließeinheit stromaufwärts des letzten Zehntels dieses Strömungswegs angeordnet ist. Das heißt, wenn man den Strömungsweg vom Lufteinlass zum Haupt-Kaltluftauslass (gedanklich) in zehn gleich große Abschnitte unterteilt, befindet sich die Schließeinheit vorteilhafterweise stromabwärts des ersten Abschnitts (vom Lufteinlass aus gezählt). Ferner befindet sich die Schließeinheit vorteilhafterweise stromaufwärts des zehnten Abschnitts (vom Lufteinlass aus gezählt). Bei einer solchen Anordnung ist die Schließeinheit vorzugsweise soweit von dem Lufteinlass und/oder dem Luftauslässen entfernt, dass sie keine Luftverwirbelungen an dem Lufteinlass bzw. an den Luftauslässen verursacht. Besagter Strömungsweg ist zweckmäßigerweise ein durch die Kaltluftführung gebildeter Strömungsweg.

Besonders bevorzugt ist es, wenn die Schließeinheit stromabwärts des ersten Fünftels und/oder stromaufwärts des letzten Fünftels des Strömungswegs vom Lufteinlass zum Haupt-Kaltluftauslass angeordnet ist. Ferner kann die Luftverteileinrichtung einen weiteren Warmluftauslass und/oder einen weiteren Neben-Kaltluftauslass aufweisen. Zweckmäßigerweise sind/ist der weitere Neben-Kaltluft und/oder der weitere Warmluftauslass mit dem Lufteinlass verbunden.

In einer bevorzugten Ausgestaltung der Erfindung weisen die Warmluftführung und die Kaltluftführung einen gemeinsamen Teilkanal auf. Zweckmäßigerweise erstreckt sich dieser gemeinsame Teilkanal vom Lufteinlass bis zur Absperreinrichtung, insbesondere bis zu deren Schließeinheit.

Besonders bevorzugt ist es, wenn der gemeinsame Teilkanal L-förmig ausgebildet ist. Dadurch lässt sich im gemeinsamen Teilkanal eine aerodynamische Führung eines Luftstroms erreichen.

Ferner kann die Kaltluftführung einen ersten Teilkanal sowie einen zweiten Teilkanal aufweisen. Der zuvor erwähnte gemeinsame Teilkanal ist zweckmäßigerweise ein dritter Teilkanal der Kaltluftführung. Außerdem ist es zweckmäßig, wenn der erste und der zweite Teilkanal über den gemeinsamen Teilkanal der Kaltluftführung und der Warmluftführung mit dem Lufteinlass verbunden sind.

Weiterhin kann sich der erste Teilkanal der Kaltluftführung zum Beispiel von der Absperreinrichtung, insbesondere von deren Schließeinheit, bis zum Haupt-Kaltluftauslass erstrecken. Der zweite Teilkanal der Kaltluftführung hingegen kann sich von der Absperreinrichtung, insbesondere von deren Schließeinheit, bis zum Neben-Kaltluftauslass erstrecken.

Zweckmäßigerweise ist der erste Teilkanal der Kaltluftführung L-förmig ausgebildet. Ferner ist es zweckmäßig, wenn der zweite Teilkanal der Kaltluftführung L-förmig ausgebildet ist.

Weiter ist es vorteilhaft, wenn die Warmluftführung einen Teilkanal aufweist, der sich von der Absperreinrichtung, insbesondere von deren Schließeinheit, bis zum Warmluftauslass erstreckt. Vorzugsweise ist dieser Teilkanal S-förmig ausgebildet. Auf diese Weise kann eine aerodynamische Führung eines Luftstroms von der Absperreinrichtung bis zum Warmluftauslass realisiert werden. Dadurch wiederum lassen sich Druckverluste in der Luftverteileinrichtung gering halten.

Des Weiteren kann der Warmluftauslass beispielsweise als eine Öffnung in der Bodenwandung der Luftverteileinrichtung ausgebildet sein. Ferner kann der Neben-Kaltluftauslass als eine Öffnung in der Bodenwandung ausgebildet sein.

Darüber hinaus können der erste und der zweite Teilkanal der Kaltluftführung einen gemeinsamen Kanalabschnitt aufweisen, welcher sich zum Beispiel von der Absperreinrichtung, insbesondere von deren Schließeinheit, bis zur Bodenwandung der Luftverteileinrichtung erstreckt.

Weiter ist es zweckmäßig, wenn die Luftverteileinrichtung eine Wandungseinheit aufweist, welche mindestens einen Abschnitt der Kaltluftführung gegenüber der Warmluftführung abgrenzt. Die Wandungseinheit kann insbesondere mehrteilig ausgebildet sein. Das heißt, die Wandungseinheit kann mehrere Wandungen umfassen. Zweckmäßigerweise bilden die Wandungen der Wandungseinheit Begrenzungswandungen der Warmluftführung bzw. der Kaltluftführung. Die Wandungseinheit kann beispielsweise mindestens eine schräg zur Bodenwandung angeordnete Wandung und/oder mindestens eine senkrecht zur Bodenwandung angeordnete Wandung aufweisen.

Einzelne oder alle Wandungen der Luftverteileinrichtung können jeweils als Paare von Blechen, insbesondere als Paare von Aluminiumblechen, ausgebildet sein. Die Bleche der jeweiligen Wandung können insbesondere voneinander beabstandet sein. Ferner kann zwischen den Blechen der jeweiligen Wandung ein Dämmmaterial angeordnet sein.

Besonders bevorzugt ist es, wenn die Schließeinheit der Absperreinrichtung an einer Oberkante der Wandungseinheit gelagert ist. Als Oberkante der Wandungseinheit kann vorliegend die oberste Kante der Wandungseinheit, d.h. die von der Bodenwandung am weitesten entfernte Kante der Wandungseinheit, verstanden werden.

Weiter ist es vorteilhaft, wenn die Luftverteileinrichtung eine Symmetrieebene aufweist. Vorzugsweise sind die beiden Warmluftauslässe und/oder die beiden Neben-Kaltluftauslässe spiegelsymmetrisch bezüglich der Symmetrieebene angeordnet. Besagte Symmetrieebene kann zugleich eine Symmetrieebene des Haupt-Kaltluftauslasses und/oder des Lufteinlasses sein.

In bevorzugter Weise sind/ist der Lufteinlass und/oder der Haupt-Kaltluftauslass mittig bezüglich der Breite der Luftverteileinrichtung angeordnet. Als Breite der Luftverteileinrichtung kann deren Ausdehnung senkrecht zu der zuvor erwähnten Symmetrieebene aufgefasst werden. Des Weiteren kann der Lufteinlass beispielsweise oberhalb des Haupt-Kaltluftauslasses angeordnet sein.

Ferner betrifft die Erfindung ein Fahrzeug, welches die erfindungsgemäße Luftverteileinrichtung, insbesondere eine der oben beschriebenen vorteilhaften Weiterbildungen der erfindungsgemäßen Luftverteileinrichtung, umfasst. Bei dem Fahrzeug kann es sich insbesondere um ein Schienenfahrzeug handeln. Zweckmäßigerweise umfasst das Fahrzeug einen Fahrgastraum.

Vorzugsweise sind die Luftauslässe der Luftverteileinrichtung jeweils mit mindestens einem Lufteinlass des Fahrgastraums verbunden. Als Lufteinlass des Fahrgastraums kann vorliegend ein Bauteil des Fahrgastraums bzw. ein Element eines Bauteils des Fahrgastraums aufgefasst werden, durch welches Luft in den Fahrgastraum eingelassen werden kann. Der jeweilige Lufteinlass des Fahrgastraums kann zum Beispiel eine Düse oder eine gelochte Platte sein.

Besonders bevorzugt ist es, wenn der Haupt-Kaltluftauslass der Luftverteileinrichtung mit einem anderen Lufteinlass des Fahrgastraums verbunden ist als der erstgenannte Neben-Kaltluftauslass und/oder der optionale weitere Neben-Kaltluftauslass der Luftverteileinrichtung.

Das Fahrzeug weist zweckmäßigerweise ein Wagenkastendach auf. Darüber hinaus ist es zweckmäßig, wenn das Fahrzeug ein Klimagerät aufweist, welches beispielsweise auf dem Wagenkastendach angeordnet sein kann. Vorzugsweise ist der Lufteinlass der Luftverteileinrichtung mit dem Klimagerät verbunden.

Die Luftverteileinrichtung kann beispielsweise in einem Dachbereich des Fahrzeugs, insbesondere zwischen dem Wagenkastendach und einer Fahrgastraumdecke, angeordnet sein.

Ferner kann das Fahrzeug insbesondere ein Doppelstockwagen mit einem Oberdeck und einem Unterdeck sein. In solch einem Fall kann die Luftverteileinrichtung zum Beispiel zwischen dem Wagenkastendach und einer Fahrgastraumdecke des Oberdecks angeordnet sein. Ferner kann die Luftverteileinrichtung mit Lufteinlässen des Oberdecks und/oder der Unterdecks verbunden sein.

Des Weiteren ist es bevorzugt, wenn der Haupt-Kaltluftauslass, der erstgenannte Neben-Kaltluftauslass und/oder der optionale weitere Neben-Kaltluftauslass über einer Lochdecke mit dem Fahrgastraum verbunden sind/ist. Unter einer Lochdecke kann vorliegend eine Fahrgastraumdecke verstanden werden, die mehrere Lufteinlassöffnungen, insbesondere runde und/oder schlitzförmige Lufteinlassöffnungen, aufweist.

Im Falle eines Doppelstockwagens kann der Haupt-Kaltluftauslass zum Beispiel über eine Lochdecke des Oberdecks mit dem Fahrgastraum verbunden. Der Neben-Kaltluftauslass sowie gegebenenfalls der optionale weitere Neben-Kaltluftauslass können/kann im diesem Fall zum Beispiel über eine Lochdecke des Unterdecks mit dem Fahrgastraum verbunden sein.

Der Warmluftauslass ist vorzugsweise mit einem oder mehreren Lufteinlässen in einem Fenster- und/oder einem Bodenbereich des Fahrgastraums verbunden.

Wenn das Klimagerät in Betrieb ist, wird zweckmäßigerweise klimatisierte Luft vom Klimagerät zum Lufteinlass der Luftverteileinrichtung geführt. Durch den Lufteinlass kann die Luft in die Luftverteileinrichtung eintreten.

Im Heizbetrieb des Klimageräts wird die Kaltluftführung vorzugsweise von der Absperreinrichtung abgesperrt, sodass die Luft nicht durch die Kaltluftauslässe, sondern durch den Warmluftauslass sowie gegebenenfalls durch den optionalen weiteren Warmluftauslass austreten kann. Im Kühlbetrieb des Klimageräts wird die Kaltluftführung vorzugsweise von der Absperreinrichtung freigegeben, sodass die Luft durch alle Luftauslässe der Luftverteileinrichtung austreten kann.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination mit der erfindungsgemäßen Vorrichtung kombinierbar.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung des Ausführungsbeispiels der Erfindung, das im Zusammenhang mit den Zeichnungen näher erläutert wird. Das Ausführungsbeispiel dient der Erläuterung der Erfindung und beschränkt die Erfindung nicht auf die darin angegebenen Kombinationen von Merkmalen, auch nicht in Bezug auf funktionale Merkmale. Außerdem können dazu geeignete Merkmale des Ausführungsbeispiels auch explizit isoliert betrachtet und mit einem beliebigen der Ansprüche kombiniert werden.

In den Zeichnungen ist ein Ausführungsbeispiel der Erfindung dargestellt, welches im Weiteren näher erläutert wird.

Es zeigen:
- FIG 1: ein Schienenfahrzeug mit einer Luftverteileinrichtung in einer schematischen Schnittdarstellung und
- FIG 2-7: die Luftverteileinrichtung aus FIG 1 in mehreren unterschiedlichen perspektivischen Darstellungen.

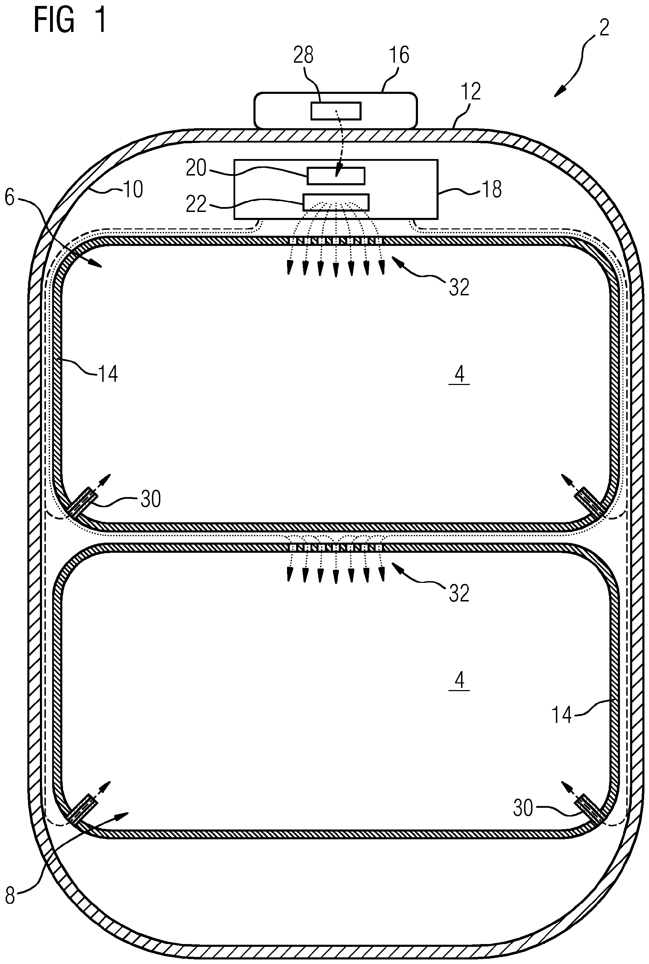

FIG 1 zeigt ein Schienenfahrzeug 2 für den Personenverkehr in einer schematischen Schnittdarstellung, wobei ein Schnitt durch das Schienenfahrzeug 2 senkrecht zu dessen Längsrichtung abgebildet ist.

Im vorliegenden Ausführungsbeispiel handelt es sich bei dem Schienenfahrzeug 2 um einen Doppelstockwagen. Das heißt, ein Fahrgastraum 4 des Schienenfahrzeugs 2 umfasst ein Oberdeck 6 sowie ein Unterdeck 8. Weiterhin umfasst das Schienenfahrzeug 2 einen Wagenkasten 10 mit einem Wagenkastendach 12. Außerdem weist das Schienenfahrzeug 2 eine Innenverkleidung 14 auf.

Des Weiteren ist das Schienenfahrzeug 2 mit einem Klimagerät 16 ausgestattet, welches auf dem Wagenkastendach 12 angeordnet ist. Ferner weist das Schienenfahrzeug 2 eine Luftverteileinrichtung 18 auf (auch Luftverteilkasten oder Luftverteilbox genannt), die oberhalb des Oberdecks 6 und unterhalb des Wagenkastendachs 12 angeordnet ist.

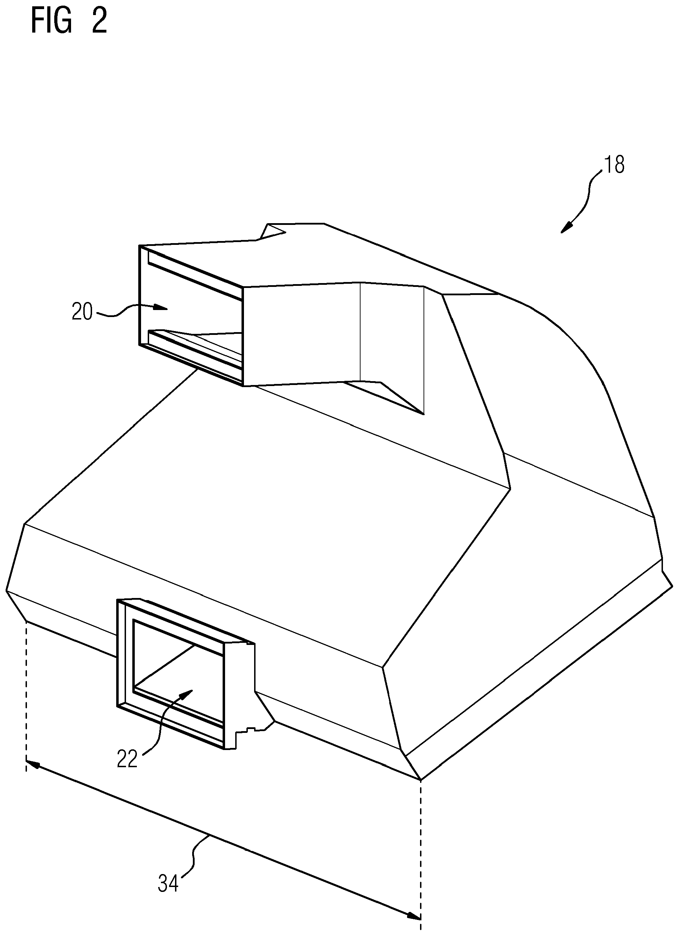

Die Luftverteileinrichtung 18 weist einen Lufteinlass 20, einen Haupt-Kaltluftauslass 22, zwei Neben-Kaltluftauslässe 24 sowie zwei Warmluftauslässe 26 auf (vgl. FIG 2 bis FIG 7).

Der Lufteinlass 20 der Luftverteileinrichtung 18 ist über eine Luftleitung mit einem Luftauslass 28 des Klimageräts 16 verbunden, sodass aus dem Klimagerät 16 austretende Luft in die Luftverteileinrichtung 18 eintreten kann. Ferner sind die beiden Warmluftauslässe 26 der Luftverteileinrichtung 18 über Luftleitungen mit Lufteinlässen 30 im Bodenbereich des Oberdecks 6 sowie mit Lufteinlässen 30 im Bodenbereich des Unterdecks 8 verbunden. Weiterhin ist der Haupt-Kaltluftauslass 22 über eine Luftleitung mit einer Lochdecke 32 des Oberdecks 6 verbunden. Die beiden Neben-Kaltluftauslässe 24 hingegen sind über Luftleitungen mit einer Lochdecke 32 des Unterdecks 8 verbunden. Zuvor erwähnte Luftleitungen sind einer besseren Übersichtlichkeit halber figürlich nicht dargestellt.

FIG 2 zeigt eine perspektivische Darstellung der zuvor erwähnten Luftverteileinrichtung 18. In FIG 2 sind der Lufteinlass 20 sowie der Haupt-Kaltluftauslass 22 der Luftverteileinrichtung 18 sichtbar.

Der Lufteinlass 20 ist oberhalb des Haupt-Kaltluftauslasses 22 angeordnet. Zudem sind der Lufteinlass 20 und der Haupt-Kaltluftauslass 22 mittig bezüglich der Breite 34 der Luftverteileinrichtung 18 angeordnet.

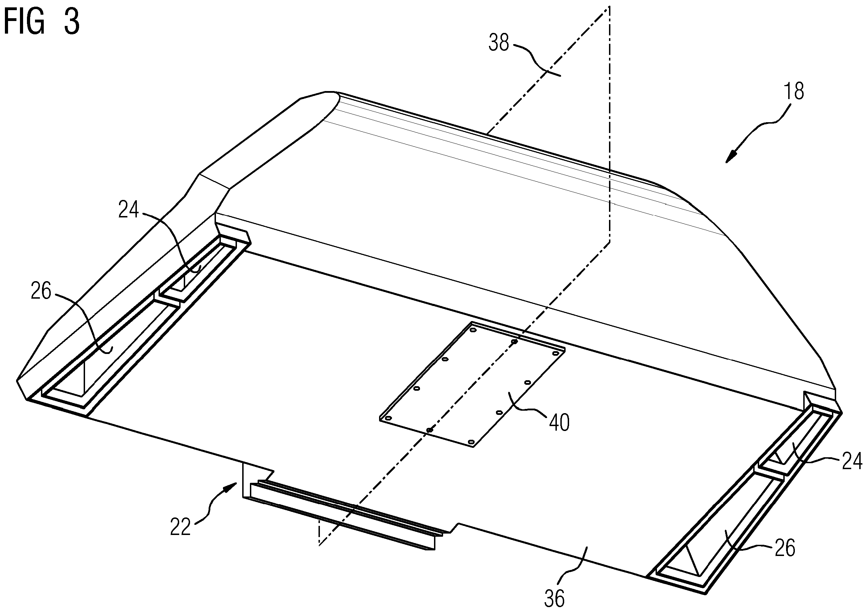

FIG 3 zeigt eine andere perspektivische Darstellung der Luftverteileinrichtung 18.

In FIG 3 ist eine Bodenwandung 36 der Luftverteileinrichtung 18 sichtbar. Die zuvor erwähnten Warmluftauslässe 26 sowie die Kaltluftauslässe 24 sind jeweils als eine Öffnung der Bodenwandung 36 ausgebildet.

Außerdem sind die beiden Warmluftauslässe 26 spiegelsymmetrisch bezüglich einer Symmetrieebene 38 der Luftverteileinrichtung 18 angeordnet. Ebenso sind die beiden Neben-Kaltluftauslässe 24 spiegelsymmetrisch bezüglich der Symmetrieebene 38 angeordnet. Die Symmetrieebene 38 ist zugleich eine Symmetrieebene des Lufteinlasses 20 sowie des Haupt-Kaltluftauslasses 22.

Ferner weist die Luftverteileinrichtung 18 an ihrer Bodenwandung 36 eine Wartungsklappe 40 auf, welche zu Wartungszwecken einen Zugang zu einem Innenraum der Luftverteileinrichtung 18 ermöglicht.

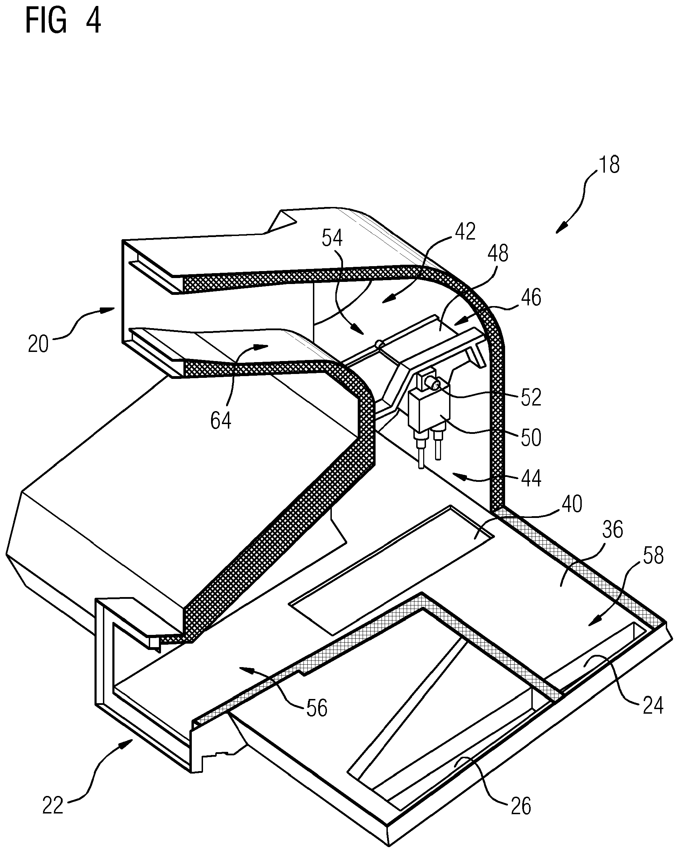

FIG 4 zeigt eine weitere perspektivische Darstellung der Luftverteileinrichtung 18, wobei die Luftverteileinrichtung 18 in einem Teilschnitt dargestellt ist.

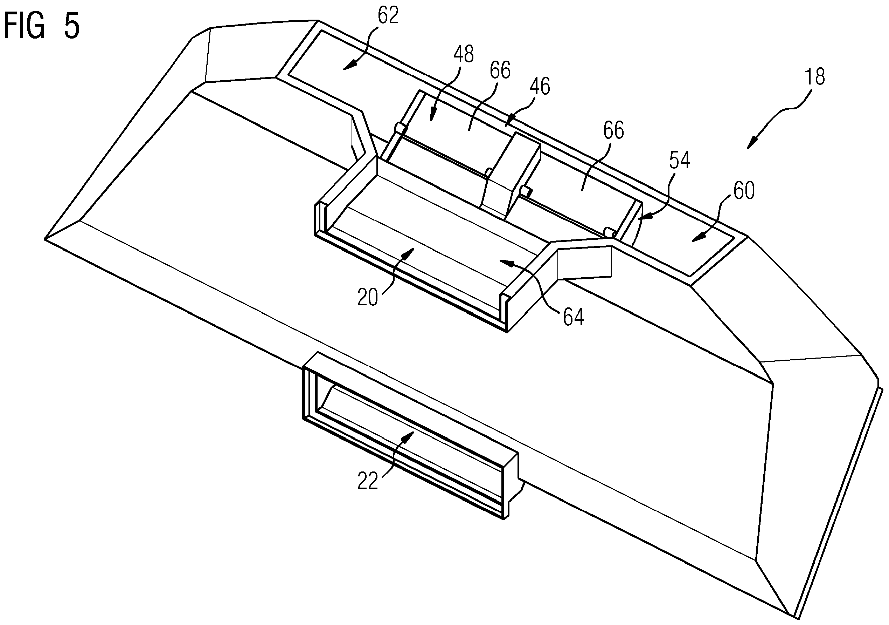

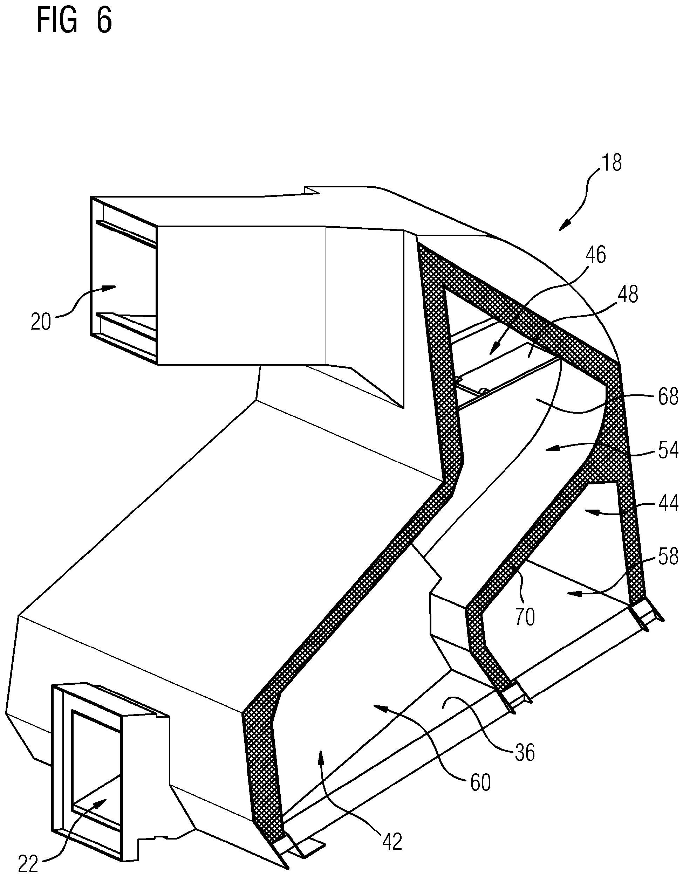

Zusätzlich zu den zuvor erwähnten Elementen weist die Luftverteileinrichtung 18 eine Warmluftführung 42 sowie eine Kaltluftführung 44 auf, die als Kanäle im Inneren der Luftverteileinrichtung 18 ausgebildet sind (vgl. FIG 5 und FIG 6).

Die Warmluftführung 42 verbindet den Lufteinlass 20 der Luftverteileinrichtung 18 mit ihren beiden Warmluftauslässen 26, während die Kaltluftführung 44 den Lufteinlass 20 der Luftverteileinrichtung 18 mit ihren Kaltluftauslässen 22, 24 verbindet.

Außerdem umfasst die Luftverteileinrichtung 18 eine Absperreinrichtung 46 zum Absperren und Freigeben der Kaltluftführung 44. Die Absperreinrichtung 46 wiederum umfasst eine Schließeinheit 48 sowie eine Antriebseinheit 50 in Form eines Elektromotors zum Antreiben der Schließeinheit 48.

Im vorliegenden Ausführungsbeispiel ist die Schließeinheit 48 eine schwenkbar gelagerte Klappe, welche über eine mit der Antriebseinheit 50 verbundene Welle 52 der Luftverteileinrichtung 18 angetrieben wird. In FIG 4 ist die Schließeinheit 48 (ebenso wie in FIG 5 und FIG 6) in einer Stellung abgebildet, in welcher sie die Kaltluftführung 44 absperrt. In dieser Stellung ist die Schließeinheit 48 parallel zur Bodenwandung 36 ausgerichtet. Um die Kaltluftführung 44 freizugeben, wird die Schließeinheit 48 um 90° geschwenkt.

Ferner umfasst die Absperreinrichtung 46 eine figürlich nicht dargestellte Steuervorrichtung in Form eines Prozessors, welche die Antriebseinheit 50 steuert.

Außerdem weist die Luftverteileinrichtung 18 eine spiegelsymmetrisch bezüglich der zuvor erwähnten Symmetrieebene 38 ausgestaltete Wandungseinheit 54 auf, die mehrere Wandungen umfasst und die Warmluftführung 42 abschnittsweise gegenüber der Kaltluftführung 44 abgrenzt (vgl. FIG 5 und FIG 6).

Die Schließeinheit 48 ist an einer Oberkante der Wandungseinheit 54 angeordnet. Im vorliegenden Ausführungsbeispiel ist die Schließeinheit 48 an einer Stelle positioniert, die sich bei circa 40% eines durch die Kaltluftführung 44 gebildeten und sich vom Lufteinlass 20 bis zum Haupt-Kaltluftauslass 22 erstreckenden Strömungsweges befindet.

Die Kaltluftführung 44 weist einen ersten Teilkanal 56 auf, der sich von der Schließeinheit 48 und der Absperreinrichtung 46 bis zum Haupt-Kaltluftauslass 22 erstreckt. Ferner weist die Kaltluftführung 44 einen zweiten Teilkanal 58 auf, der sich von der Schließeinheit 48 bis zu einem der beiden Neben-Kaltluftauslässe 24 erstreckt. Zudem weist die Kaltluftführung 44 einen dritten Teilkanal auf, welcher sich von der Schließeinheit 48 bis zum anderen der beiden Neben-Kaltluftauslässe 24 erstreckt, wobei der letztgenannte Teilkanal in der Schnittdarstellung der FIG 4 nicht erkennbar ist.

Die besagten drei Teilkanäle der Kaltluftführung 44 sind L-förmig ausgestaltet. Außerdem sind der zweite Teilkanal 58 und der dritte Teilkanal der Kaltluftführung 44 spiegelsymmetrisch bezüglich der Symmetrieebene 38 der Luftverteileinrichtung 18 ausgebildet. Zudem weisen die drei Teilkanäle der Kaltluftführung 44 einen gemeinsamen Kanalabschnitt auf, der sich von der Schließeinheit 48 bis zur Bodenwandung 36 erstreckt.

Die Warmluftführung 42 umfasst einen ersten Teilkanal 60, der sich von der Schließeinheit 48 bis zu einem der beiden Warmluftauslässe 26 erstreckt (vgl. FIG 6). Des Weiteren umfasst die Warmluftführung 42 einen zweiten Teilkanal 62, welcher sich von der Schließeinheit 48 bis zum anderen der beiden Warmluftauslässe 26 erstreckt (vgl. FIG 5).

Die besagten Teilkanäle 60, 62 der Warmluftführung 42 sind S-förmig ausgestaltet sowie spiegelsymmetrisch bezüglich der Symmetrieebene 38 der Luftverteileinrichtung 18 ausgebildet.

Darüber hinaus umfassen die Kaltluftführung 44 und die Warmluftführung 42 einen L-förmig ausgebildeten gemeinsamen Teilkanal 64, der sich vom Lufteinlass 20 der Luftverteileinrichtung 18 bis zur Schließeinheit 48 erstreckt. Dieser Teilkanal 64 ist ein vierter Teilkanal der Kaltluftführung 44 bzw. ein dritter Teilkanal der Warmluftführung 42.

Der zuvor erwähnte sich vom Lufteinlass 20 bis zum Haupt-Kaltluftauslass 22 erstreckenden Strömungsweg wird durch den gemeinsamen Teilkanal 64 der Kaltluftführung 44 und der Warmluftführung 42 sowie durch den ersten Teilkanal 56 der Kaltluftführung 44 ausgebildet.

FIG 5 zeigt noch eine andere perspektivische Darstellung der Luftverteileinrichtung 18, wobei die Luftverteileinrichtung 18 wieder in einem Teilschnitt dargestellt ist.

Aus FIG 5 ist ersichtlich, dass die Schließeinheit 48 durch zwei Platten 66 ausgebildet ist. Die Platten 66 sind spiegelsymmetrisch bezüglich der zuvor erwähnten Symmetrieebene 38 der Luftverteileinrichtung 18 angeordnet. Zudem sind die beiden Platten 66 mittels besagter Welle 52 miteinander verbunden, sodass die Platten 66 durch die Antriebseinheit 50 simultan und gleichsinnig antreibbar sind.

Außerdem sind in FIG 5 ein Abschnitt des ersten Teilkanals 60 der Warmluftführung 42 sowie ein Abschnitt des zweiten Teilkanals 62 der Warmluftführung 42 erkennbar.

FIG 6 zeigt noch eine weitere perspektivische Darstellung der Luftverteileinrichtung 18, wobei die Luftverteileinrichtung 18 auch in dieser Figur in einem Teilschnitt dargestellt ist.

In FIG 6 ist die Form des ersten Teilkanals 60 der Warmluftführung 42 erkennbar, welcher auch der Form des zweiten Teilkanals 62 der Warmluftführung 42 entspricht. Außerdem sind in FIG 6 eine senkrecht zur Bodenwandung 36 ausgerichtete Wandung 68 der Wandungseinheit 54 sowie eine schräg zur Bodenwandung 36 ausgerichtete Wandung 70 der Wandungseinheit 54 erkennbar, wobei die Luftverteileinrichtung 18 auf der anderen Seite ihrer Symmetrieebene 38 eine weitere senkrecht zur Bodenwandung 36 ausgerichtete Wandung sowie eine weitere schräg zur Bodenwandung 36 ausgerichtete Wandung umfasst.

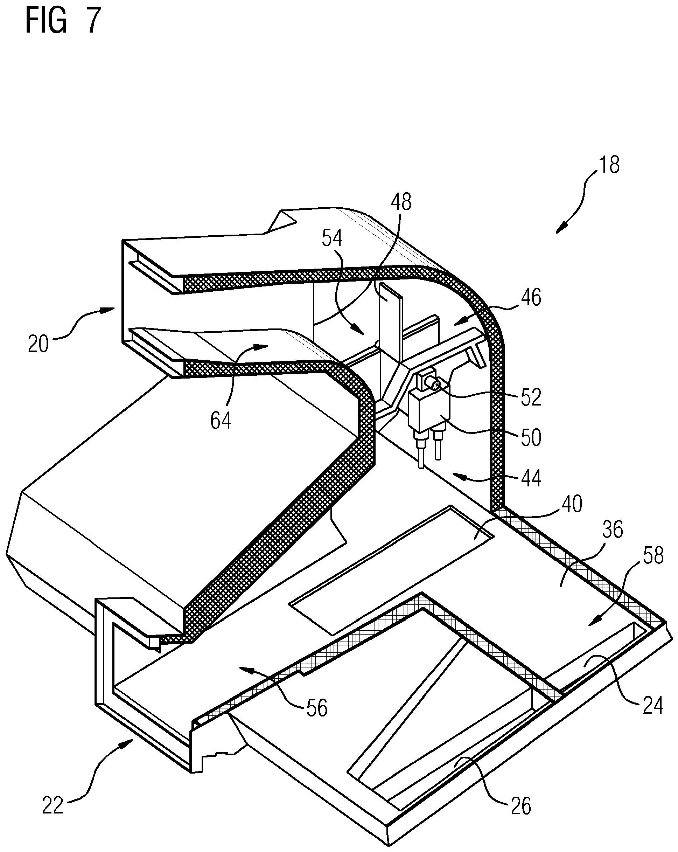

FIG 7 zeigt die Luftverteileinrichtung 18 aus derselben Perspektive wie in FIG 4 sowie ebenfalls in einem Teilschnitt.

Anders als in FIG 4 ist die Schließeinheit 48 der Absperreinrichtung 46 in FIG 7 in einer Stellung dargestellt, in welcher die Schließeinheit 48 die Kaltluftführung 44 freigibt, sodass Luft, die durch den Lufteinlass 20 in die Luftverteileinrichtung 18 eintritt, zu den Kaltluftauslässen 22, 24 strömen kann. In dieser Stellung ist die Schließeinheit 48 senkrecht zur Bodenwandung 36 ausgerichtet.

Wenn das Klimagerät 16 in Betrieb ist, tritt klimatisierte Luft aus dem Luftauslass 28 des Klimageräts 16 aus. Wird das Klimagerät 16 im Heizmodus betrieben, so tritt aus dessen Luftauslass 28 Warmluft aus. Wird das Klimagerät 16 hingegen in Kühlmodus betrieben, so tritt aus dessen Luftauslass 28 Kaltluft aus.

Die aus dem Klimagerät 16 austretende Luft strömt zu der Luftverteileinrichtung 18 und tritt durch den Lufteinlass 20 der Luftverteileinrichtung 18 in deren Innenraum ein. Von der Luftverteileinrichtung 18 wird die Luft - je nach Betriebsmodus des Klimageräts 16 - entweder nur zu ihren Warmluftauslässen 26 oder sowohl zu ihren Warmluftauslässen 26 als auch zu ihren Kaltluftauslässen 22, 24 geführt.

Wenn das Klimagerät 16 im Heizmodus betrieben wird, so wird die Kaltluftführung 44 durch die Absperreinrichtung 46 abgesperrt gehalten, sodass die durch den Lufteinlass 20 in die Luftverteileinrichtung 18 eintretende (Warm-)Luft nicht zu den Kaltluftauslässen 22, 24 strömen kann. In diesem Fall strömt die Luft lediglich zu den Warmluftauslässen 26 und tritt durch diese aus der Luftverteileinrichtung 18 aus. Über die Lufteinlässe 30 im Bodenbereich des Oberdecks 6 sowie im Bodenbereich des Unterdecks 8 strömt die Luft in den Fahrgastraum 4 ein, wo die Luft konvektionsbegingt nach oben steigt.

Wenn das Klimagerät 16 dagegen im Kühlmodus betrieben wird, wird die Kaltluftführung 44 von der Absperreinrichtung 46, freigegeben, sodass die durch den Lufteinlass 20 in die Luftverteileinrichtung 18 eintretende (Kalt-)Luft sowohl zu den Warmluftauslässen 26 als auch zu den Kaltluftauslässen 22, 24 strömen kann. In diesem Fall tritt die Luft durch die Warmluftauslässe 26 sowie durch die Kaltluftauslässe 22, 24 aus der Luftverteileinrichtung 18 aus. Weiterhin strömt die Luft über die Lufteinlässe 30 im Bodenbereich des Ober- und Unterdecks 6, 8 sowie über die Lochdecke 32 des Oberdecks 6 und die Lochdecke 32 des Unterdecks 8 in den Fahrgastraum 4 ein. Eines besseren Verständnisses halber sind in FIG 1 die Strömungswege der aus dem Klimagerät 16 austretenden Luft sowie der aus den Luftauslässen 22, 24, 26 der Luftverteileinrichtung 18 austretenden Luft schematisch in Form von Pfeilen dargestellt. Für die Strömungswege der aus den Warmluftauslässen 26 austretenden Luft werden dabei gestrichelte Linien verwendet und für die Strömungswege der aus den Kaltluftauslässen 22, 24 austretenden Luft werden gepunktete Linien verwendet. Für den Strömungsweg der aus dem Luftauslass 28 des Klimageräts 16 austretenden Luft wird hingegen eine strichpunktierte Linie verwendet.

Obwohl die Erfindung im Detail durch das bevorzugte Ausführungsbeispiel näher illustriert und beschrieben wurde, so ist die Erfindung nicht durch das offenbarte Beispiel eingeschränkt und andere Variationen können im Rahmen des Schutzumfangs der Ansprüche abgeleitet werden.

## Patentansprüche

1. Luftverteileinrichtung (18) für ein Fahrzeug (2), welche einen Lufteinlass (20), einen Warmluftauslass (26) und einen Haupt-Kaltluftauslass (22) aufweist,
**gekennzeichnet durch** eine Warmluftführung (42), durch welche der Warmluftauslass (26) mit dem Lufteinlass (20) verbunden ist, eine Kaltluftführung (44), durch welche der Haupt-Kaltluftauslass (22) und ein Neben-Kaltluftauslass (24) der Luftverteileinrichtung (18) mit dem Lufteinlass (20) verbunden sind, und eine Absperreinrichtung (46) zum Absperren und Freigeben der Kaltluftführung (44).

2. Luftverteileinrichtung (18) nach Anspruch 1,
**dadurch gekennzeichnet, dass** die Absperreinrichtung (46) eine Schließeinheit (48) sowie eine Antriebseinheit (50), insbesondere einen Elektromotor, zum Antreiben der Schließeinheit (48) aufweist.

3. Luftverteileinrichtung (18) nach Anspruch 2,
**dadurch gekennzeichnet, dass** die Schließeinheit (48) eine schwenkbar gelagerte Klappe ist.

4. Luftverteileinrichtung (18) nach Anspruch 2 oder 3,
**dadurch gekennzeichnet, dass** die Schließeinheit (48) stromabwärts des ersten Zehntels und/oder stromaufwärts des letzten Zehntels eines sich vom Lufteinlass (20) zum Haupt-Kaltluftauslass (22) erstreckenden Strömungswegs angeordnet ist.

5. Luftverteileinrichtung (18) nach einem der vorhergehenden Ansprüche,
**dadurch gekennzeichnet, dass** die Warmluftführung (42) und die Kaltluftführung (44) einen gemeinsamen Teilkanal (64) aufweisen, welcher sich vom Lufteinlass (20) bis zur Absperreinrichtung (46) erstreckt.

6. Luftverteileinrichtung (18) nach Anspruch 5,
**dadurch gekennzeichnet, dass** der gemeinsame Teilkanal (64) L-förmig ausgebildet ist.

7. Luftverteileinrichtung (18) nach einem der vorhergehenden Ansprüche,
**dadurch gekennzeichnet, dass** die Kaltluftführung (44) einen ersten Teilkanal (56) sowie einen zweiten Teilkanal (58) aufweist, wobei sich der erste Teilkanal (56) von der Absperreinrichtung (46) bis zum Haupt-Kaltluftauslass (22) erstreckt und sich der zweite Teilkanal (58) von der Absperreinrichtung (46) bis zum Neben-Kaltluftauslass (24) erstreckt.

8. Luftverteileinrichtung (18) nach Anspruch 7,
**dadurch gekennzeichnet, dass** der erste und der zweite Teilkanal (56, 58) der Kaltluftführung (44) L-förmig ausgebildet sind.

9. Luftverteileinrichtung (18) nach einem der vorhergehenden Ansprüche,
**dadurch gekennzeichnet, dass** die Warmluftführung (42) einen Teilkanal (60, 62) aufweist, der sich von der Absperreinrichtung (46) bis zum Warmluftauslass (26) erstreckt.

10. Luftverteileinrichtung (18) nach Anspruch 9,
**dadurch gekennzeichnet, dass** der Teilkanal (60, 62) der Warmluftführung (42), der sich von der Absperreinrichtung (46) bis zum Warmluftauslass (26) erstreckt, S-förmig ausgebildet ist.

11. Luftverteileinrichtung (18) nach einem der vorhergehenden Ansprüche,
**gekennzeichnet durch** eine Bodenwandung (36), wobei der Warmluftauslass (26) und der Neben-Kaltluftauslass (24) jeweils als eine Öffnung in der Bodenwandung (36) ausgebildet sind.

12. Luftverteileinrichtung (18) nach einem der vorhergehenden Ansprüche,
**gekennzeichnet durch** einen weiteren Warmluftauslass (26) sowie einen weiteren Neben-Kaltluftauslass (24), welche mit dem Lufteinlass (20) verbunden sind.

13. Luftverteileinrichtung (18) nach Anspruch 12,
**dadurch gekennzeichnet, dass** die beiden Warmluftauslässe (26) und/oder die beiden Neben-Kaltluftauslässe (24) spiegelsymmetrisch bezüglich einer Symmetrieebene (38) der Luftverteileinrichtung (18) angeordnet sind.

14. Fahrzeug (2), insbesondere Schienenfahrzeug, mit einer Luftverteileinrichtung (18) nach einem der vorhergehenden Ansprüche, sowie einem Fahrgastraum (4), wobei die Luftauslässe (22, 24, 26) der Luftverteileinrichtung (18) jeweils mit mindestens einem Lufteinlass (20) des Fahrgastraums (4) verbunden sind.

15. Fahrzeug (2) nach Anspruch 14,
**gekennzeichnet durch** ein Wagenkastendach (12) sowie ein Klimagerät (16), welches auf dem Wagenkastendach (12) angeordnet ist, wobei der Lufteinlass (20) der Luftverteileinrichtung (18) mit dem Klimagerät (16) verbunden ist.

## Claims

1. Air distribution device (18) for a vehicle (2), which air distribution device has an air inlet (20), a warm-air outlet (26) and a main cold-air outlet (22),
**characterized by** a warm-air conduit (42) by which the warm-air outlet (26) is connected to the air inlet (20), a cold-air conduit (44) by which the main cold-air outlet (22) and a secondary cold-air outlet (24) of the air distribution device (18) are connected to the air inlet (20), and a shut-off device (46) for shutting off and opening up the cold-air conduit (44).

2. Air distribution device (18) according to Claim 1,
**characterized in that** the shut-off device (46) has a closing unit (48) and a drive unit (50), in particular an electric motor, for driving the closing unit (48).

3. Air distribution device (18) according to Claim 2,
**characterized in that** the closing unit (48) is a pivotably mounted flap.

4. Air distribution device (18) according to Claim 2 or 3,
**characterized in that** the closing unit (48) is arranged downstream of the first tenth and/or upstream of the final tenth of a flow path which extends from the air inlet (20) to the main cold-air outlet (22).

5. Air distribution device (18) according to any of the preceding claims,
**characterized in that** the warm-air conduit (42) and the cold-air conduit (44) have a common partial channel (64) which extends from the air inlet (20) to the shut-off device (46).

6. Air distribution device (18) according to Claim 5,
**characterized in that** the common partial channel (64) is of L-shaped form.

7. Air distribution device (18) according to any of the preceding claims,
**characterized in that** the cold-air conduit (44) has a first partial channel (56) and a second partial channel (58), wherein the first partial channel (56) extends from the shut-off device (46) to the main cold-air outlet (22) and the second partial channel (58) extends from the shut-off device (46) to the secondary cold-air outlet (24).

8. Air distribution device (18) according to Claim 7,
**characterized in that** the first and the second partial channel (56, 58) of the cold-air conduit (44) are of L-shaped form.

9. Air distribution device (18) according to any of the preceding claims,
**characterized in that** the warm-air conduit (42) has a partial channel (60, 62) which extends from the shut-off device (46) to the warm-air outlet (26).

10. Air distribution device (18) according to Claim 9,
**characterized in that** that partial channel (60, 62) of the warm-air conduit (42) which extends from the shut-off device (46) to the warm-air outlet (26) is of S-shaped form.

11. Air distribution device (18) according to any of the preceding claims,
**characterized by** a base wall (36), wherein the warm-air outlet (26) and the secondary cold-air outlet (24) are each formed as an opening in the base wall (36).

12. Air distribution device (18) according to any of the preceding claims,
**characterized by** a further warm-air outlet (26) and a further secondary cold-air outlet (24), which are connected to the air inlet (20).

13. Air distribution device (18) according to Claim 12,
**characterized in that** the two warm-air outlets (26) and/or the two secondary cold-air outlets (24) are arranged mirror-symmetrically with respect to a plane of symmetry (38) of the air distribution device (18).

14. Vehicle (2), in particular rail vehicle, having an air distribution device (18) according to any of the preceding claims, and having a passenger compartment (4), wherein the air outlets (22, 24, 26) of the air distribution device (18) are connected in each case to at least one air inlet (20) of the passenger compartment (4).

15. Vehicle (2) according to Claim 14,
**characterized by** a car body roof (12) and an air-conditioning unit (16) which is arranged on the car body roof (12), wherein the air inlet (20) of the air distribution device (18) is connected to the air-conditioning unit (16).

## Revendications

1. Dispositif (18) de répartition de l'air pour un véhicule (2), qui a une entrée (20) d'air, une sortie (26) d'air chaud et une sortie (22) principale d'air froid,
**caractérisé par** un conduit (42) d'air chaud, par lequel la sortie (26) d'air chaud communique avec l'entrée (20) d'air, un conduit (44) d'air froid, par lequel la sortie (22) principale d'air froid et une sortie (24) secondaire d'air froid du dispositif (18) de répartition de l'air communique avec l'entrée (20) d'air, et un dispositif (46) d'obturation pour obturer et dégager le conduit (44) d'air froid.

2. Dispositif (18) de répartition de l'air suivant la revendication 1,
**caractérisé en ce que** le dispositif (46) d'obturation a une unité (48) de fermeture, ainsi qu'une unité (50) d'entraînement, notamment un moteur électrique, pour l'entraînement de l'unité (48) de fermeture.

3. Dispositif (18) de répartition de l'air suivant la revendication 2,
**caractérisé en ce que** l'unité (48) de fermeture est un volet monté pivotant.

4. Dispositif (18) de répartition de l'air suivant la revendication 2 ou 3,
**caractérisé en ce que** l'unité (48) de fermeture est en aval du premier dixième et/ou en amont du dernier dixième d'un trajet d'écoulement s'étendant de l'entrée (20) d'air à la sortie (22) principale d'air froid.

5. Dispositif (18) de répartition de l'air suivant l'une des revendications précédentes,
**caractérisé en ce que** le conduit (42) d'air chaud et le conduit (44) d'air froid ont un sous-conduit (64) commun, qui s'étend de l'entrée (20) d'air au dispositif (46) d'obturation.

6. Dispositif (18) de répartition de l'air suivant la revendication 5,
**caractérisé en ce que** le sous-conduit (64) commun est en forme de L.

7. Dispositif (18) de répartition de l'air suivant l'une des revendications précédentes,
**caractérisé en ce que** le conduit (44) d'air froid a un premier sous-conduit (56), ainsi qu'un deuxième sous-conduit (58), le premier sous-conduit (56) s'étendant du dispositif (46) d'obturation à la sortie (22) principale d'air froid et le deuxième sous-conduit (58) s'étendant du dispositif (46) d'obturation à la sortie (24) secondaire d'air froid.

8. Dispositif (18) de répartition de l'air suivant la revendication 7,
**caractérisé en ce que** le premier et le deuxième sous-conduits (56, 58) du conduit (44) d'air froid sont en forme de L.

9. Dispositif (18) de répartition de l'air suivant l'une des revendications précédentes,
**caractérisé en ce que** le conduit (42) d'air chaud a un sous-conduit (60, 62), qui s'étend du dispositif (46) d'obturation à la sortie (26) d'air chaud.

10. Dispositif (18) de répartition de l'air suivant la revendication 9,
**caractérisé en ce que** le sous-conduit (60, 62) du conduit (42) d'air chaud, qui s'étend du dispositif (46) d'obturation à la sortie (26) d'air chaud, est en forme de S.

11. Dispositif (18) de répartition de l'air suivant l'une des revendications précédentes,
**caractérisé par** une paroi (36) de fond, la sortie (26) d'air chaud et la sortie (24) secondaire d'air froid étant constituées chacune sous la forme d'une ouverture dans la paroi (36) de fond.

12. Dispositif (18) de répartition de l'air suivant l'une des revendications précédentes,
**caractérisé par** une autre sortie (26) d'air chaud, ainsi que par une autre sortie (24) secondaire d'air froid, qui communiquent avec l'entrée (20) d'air.

13. Dispositif (18) de répartition de l'air suivant la revendication 12,
**caractérisé en ce que** les deux sorties (26) d'air chaud et/ou les deux sorties (24) secondaires d'air froid sont disposées d'une manière symétrique comme en un miroir par rapport à un plan (38) de symétrie du dispositif (18) de répartition d'air.

14. Véhicule (2), notamment véhicule ferroviaire, comprenant un dispositif (18) de répartition de l'air suivant l'une des revendications précédentes, ainsi qu'un espace (4) pour passager, les sorties (22, 24, 26) d'air du dispositif (18) de répartition de l'air communiquant chacune avec au moins une entrée (20) d'air de l'espace (4) pour passager.

15. Véhicule (2) suivant la revendication 14,
**caractérisé par** un toit (12) de caisse, ainsi que par un appareil (16) de conditionnement d'air, qui est monté sur le toit (12) de caisse, l'entrée (20) d'air du dispositif (18) de répartition de l'air communiquant avec l'appareil (16) de conditionnement d'air.
